# EUROPEAN PATENT APPLICATION

(11) **EP 4 772 404 A1**
(43) Date of publication of application: **08.07.2026**
(21) Application number: 26150055.7
(22) Date of filing: 02.01.2026
(51) Int. Cl.: B60R 16/02, H02G 3/32

(54) **TRUCK COMPRISING A CABLE MOUNTING SYSTEM, AND METHOD FOR MOUNTING HIGH VOLTAGE POWER CABLES**

(30) Priority: 03.01.2025 NL 2039540
(71) Applicant: DAF Trucks N.V., 5643 TW Eindhoven (NL)
(72) Inventor: KEIJZER, Coenraad Anton, 5643 TW Eindhoven (NL); TAWALE, Gajendra, 5643 TW Eindhoven (NL); DESHMUKH, Sagar Suresh, 5643 TW Eindhoven (NL)
(74) Representative: V.O.

(57) **Abstract**

Disclosed herein is a truck with a cable mounting system, and a method for mounting high voltage power cables. Using one or more cable fixtures, high voltage power cables are locally clamped to each other. One or more weld nuts are welded to a first side of a base plate, and a threaded stud is screwed into each weld nut, such that a first axial end is secured to the weld nut and a second axial end of the threaded stud protrudes through a hole in the base plate to an opposing second side. A fixation part of a respective cable fixture is placed against the second side of the base plate, such that the second axial end of the stud extends through a fixation part, and a mounting nut is tightened onto the second axial end beyond the fixation part for thereby clamping the cable fixture onto the base plate.

## Description

The invention relates to a truck comprising a high voltage power system.

The invention further relates to a method for mounting high voltage power cables over a predefined cable path in a truck.

### BACKGROUND

Nowadays, vehicles such as trucks may be provided with a high voltage power system, e.g. involving voltages of more than 400 V, comprising a power source like a fuel cell system and/or a battery pack arranged for supplying the high voltage power to an electrical load. For example, in hybrid or fully electric trucks the power source may be arranged for supplying power to an electric motor that drives the truck's powertrain. Such an electric motor may operate at a voltage up to 1500 V. Due to the relatively high power transmission involved, e.g. over 400 kW, the conductive cores of the power cables that extend between the power source and the load usually have a relatively large diameter to minimize losses. The insulating sleeve around the core further increases the diameter of the power cables. As a result, high voltage (HV) power cables in a truck are relatively stiff and difficult to bend and twist during assembly in the truck, e.g. when mounting the HV power cables along a predefined path.

In conventional assembly methods, the HV power cables are usually to be secured at specific mounting points on a frame part, e.g. using fasteners such as clamps, rivets, bolts and nuts. However, due to the large mass and stiffness of the HV power cables acting on the mounting points and fasteners, and also on an operator's hands, it is challenging and cumbersome for the operator to correctly mount the HV power cables.

Particularly in trucks, where components are densely packed in a compact architecture, the relatively tight spaces for maneuvering and securing components further hinders the assembly process.

The present invention aims to address this issue by facilitating the assembly process of HV power cables.

### SUMMARY

In one aspect, the invention provides a truck, comprising a high voltage power system which includes a number of high voltage power cables arranged for transferring electric power from a high voltage power supply to an electrical load, and a cable mounting system arranged for mounting the high voltage power cables over a predefined cable path.

The cable mounting system comprises one or more cable fixtures, each cable fixture comprising a clamping part that is arranged for locally fixating the high voltage power cables to each other. A base plate is provided with a series of holes that define the cable path, wherein a weld nut is welded in alignment with each hole to a first side of the base plate. A detachable threaded stud is detachably screwed with its first axial end into a respective weld nut, and its second axial end extends through the hole to an opposing second side of the base plate.

Each cable fixture has a fixation part for fixating the cable fixture to the second side of the base plate. The second axial end of the stud extends through a positioning hole in the fixation part for positioning the cable fixture with respect to the cable path. A mounting nut is tightened onto the second axial end beyond the fixation part for thereby mounting the cable fixture onto the base plate.

The cable mounting system of the present invention facilitates the process of mounting high voltage power cables along a predefined cable path, and prevents damage to the components, even when the assembly process is performed in a tight space. By having a base plate provided with weld nuts, into which threaded studs can be screwed during the assembly process, rather than having a base plate with integral studs, it is prevented that the studs and/or or the plate get damaged or bent. For example in storage, multiple base plates may be adjacently packed or stacked against each other. By only pre-welding weld nuts to the base plate, the base plate is more compact and the risk of interlocking parts is reduced. Furthermore, by not having the detachable studs pre-assembled to the base plate, it is easier to adjust the shape of the high voltage power cables during the assembly process to match the predefined path, since the studs are not in the way.

Compared to conventional approaches, the cable mounting system of the present invention does not merely replace loose hex nuts by welded nuts, but also proposes to position and secure the cable fixtures on the predefined cable path using threaded studs. This arrangement is found to reduce the risk of damaging components, in contrast to an approach in which bolts are first inserted through a stack of clamps and then screwed onto the base plate. Furthermore, the system of the present invention ensures that during assembly, before the mounting nut is tightened, the cable fixtures remain in place in their aligned position on the cable path, regardless of the high tension in the high voltage power cables.

By having a weld nut attached to the base plate in line with the hole, a simple yet effective solution is provided for anchoring and aligning the detachable threaded stud(s) without decreasing the manufacturability and weight of the base plate. This is because the base plate can be made of sheet metal precut with holes to define the cable path, with the weld nuts attached locally at the holes. The nominal diameter and length of the threaded connection can easily be adapted by selecting a specific type of weld nut, e.g. an M10 or M12 nut, with a desired pitch and height. Alternatively, when a thicker base plate is used, a thread can be pre-tapped directly in the holes. Alternatively, the base plate may be cast or forged with locally increased thickness around the holes, and provided with an internal thread. In other words, in some embodiments the weld nut(s) may be integrally formed with the base plate.

Preferably, the clamping part is arranged for clamping the high voltage cables with a first force, and the mounting nut is arranged for fixating the fixation part onto the base plate with a second force, which is preferably higher than the first force.

The fixation part may comprise a reinforced strut that extends perpendicularly from the base plate around the positioning hole, and the reinforced strut may be arranged for directly transferring a clamping force, e.g. the abovementioned second force, between the clamp nut and the mounting plane. In other words, the force applied by the mounting nut is not directed through the clamping part and onto the high voltage power cables, but only passes through the reinforced strut. To achieve this, the cable fixture can for example comprise one or more arms that extend laterally from the reinforced strut portion and are arranged for securing the high voltage cables. The arms thus provide the clamping part of the cable fixture at a lateral offset from the reinforced strut.

In preferred embodiments, the clamp nut is a hex nut with an integrated washer, preferably with a locking feature, to further facilitate the assembly process.

Regarding the detachable threaded stud, in preferred embodiments the first axial end comprises a first threaded section arranged for mounting to the weld nut, and the second axial end comprises a second threaded section arranged for mounting to the clamp nut. When the second threaded section differs from the first threaded section, a "poka yoke" type solution is provided to reduce the chance of assembly error.

For example, an axial thread length of the first threaded section may be shorter than an axial thread length of the second threaded section. Alternatively or additionally, a nominal thread diameter of the first threaded section is smaller than a nominal thread diameter of the second threaded section. For example, the first threaded section has an M10 thread, and the second threaded section has an M12 thread. By having a larger nominal thread diameter at the second threaded section, the stud is self-locking in the weld nut. In other words, the increased diameter beyond the first threaded section provides a shoulder that abuts the base plate on the first side when the stud is screwed into the weld nut. By having such a step in diameter, the stud is aligned perpendicularly to the base plate when mounted, and the step or shoulder constrains rotations and translations of the stud with respect to the base plate, thereby increasing the rigidity of the assembly.

The detachable stud optionally comprises an unthreaded section between the first and second axial end. This third, unthreaded section can e.g. be arranged for aligning the stud with the positioning hole in the fixation part of the cable fixture. For example, the unthreaded section and the positioning hole may have similar, mating cross sections, to center the cable fixture with respect to the stud and, as a result, with the predefined path. The diameter of the second threaded section may be the same size or smaller than the diameter or cross section of the unthreaded section, so that the cable fixture can be fit over the stud. The third section may provide a shoulder that abuts the second side of the base plate for locking the first threaded section in the weld nut.

In some embodiments, the detachable threaded stud comprises a dog point that axially extends beyond the first and/or second axial end, to further facilitate assembly of the threaded stud into the base plate with weld nut and/or into the clamping nut.

In other aspects, the present invention provides a method for mounting high voltage power cables over a predefined cable path in a truck, preferably the truck described herein. The method comprises: (i) locally clamping, using clamping parts of one or more cable fixtures, the high voltage power cables to each other at a predefined interdistance; (ii) providing a base plate with one or more mounting holes along the cable path; (iii) welding one or more weld nuts to a first side of the base plate such that each weld nut is coaxially aligned with the respective mounting hole; (iv) screwing a threaded stud into each weld nut, such that a first axial end is secured to the weld nut and a second axial end of the threaded stud protrudes through the mounting hole to an opposing second side of the base plate; (v) placing a fixation part of a respective cable fixture against the second side of the base plate, such that the second axial end of the stud extends through a positioning hole in the fixation part; and (vi) tightening a mounting nut onto the second axial end beyond the fixation part for thereby clamping the cable fixture onto the base plate.

Preferably, the one or more weld nuts are pre-welded to the first side of the base plate to facilitate the assembly process. Alternatively, the weld nuts may be integrally formed with the base plate.

### BRIEF DESCRIPTION OF THE DRAWINGS

The invention will be further elucidated in the figures:
FIG. 1 illustrates an embodiment of a truck, comprising a high voltage power system and a cable mounting system;
FIG. 2 illustrates in more detail an embodiment of the cable mounting system;
FIG. 3 illustrates an exemplary embodiment of a detachable threaded stud of the cable mounting system;
FIG. 4 schematically represents a method for mounting high voltage power cables over a predefined cable path in a truck.

### DETAILED DESCRIPTION

The invention is described more fully hereinafter with reference to the accompanying drawings, in which embodiments of the invention are shown.

In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

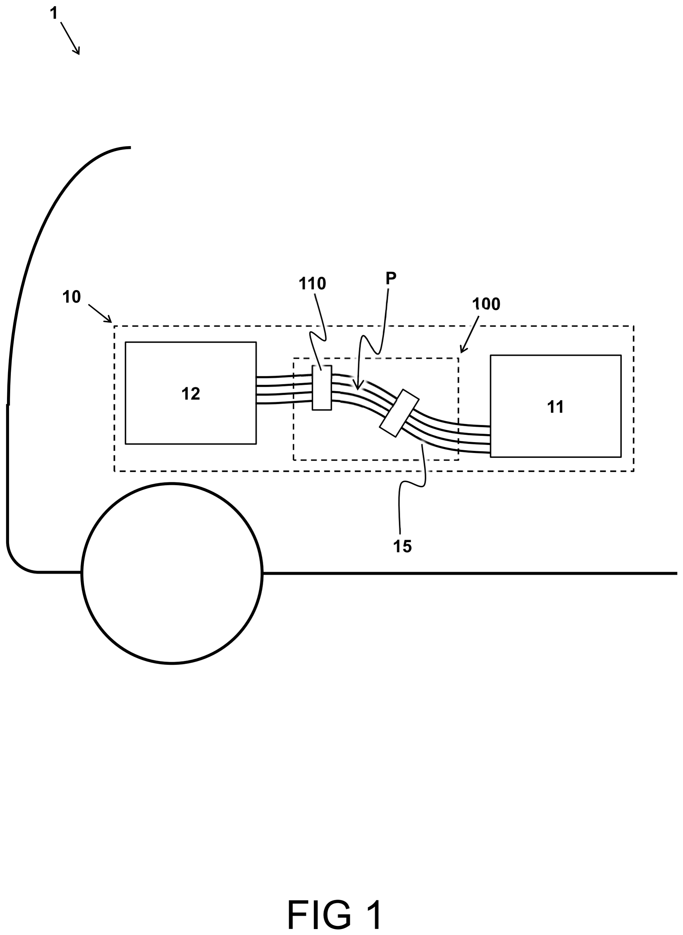

FIG. 1 illustrates an embodiment of a commercial vehicle, in particular a truck 1 comprising a high voltage power system 10. The truck 1 e.g. is a hybrid or full electric truck, in which the powertrain is at least partially driven by an electric traction motor that operates on high voltage, e.g. more than 400 V. Instead of a truck, the vehicle 1 can be any other type of road or land vehicle, water vehicle or air vehicle. Alternatively, or additionally to an electric power train, the vehicle may comprise one or more other electric loads, or devices, that operate on a high voltage. The high voltage power system 10 further comprises a high voltage power supply 11, e.g. including a battery pack and/or a fuel cell unit, coupled to one or more power converters, for supplying high voltage electric power. The high voltage power system 10 includes a number of high voltage power cables 15 arranged for transferring electric power from the high voltage power supply 11 to an electrical load 12.

The high voltage power cables 15 are mounted along a predefined cable path P by a cable mounting system 100. The predefined path P extends between the high voltage power supply 11 and the electrical load 12, and may comprise straight sections and curved sections. The cable mounting system 100 ensures that the high voltage power cables 15 remain securely fixed along the cable path P during operating conditions of the truck, e.g. with a sufficient clearance to other components of the truck to avoid damage to the cables.

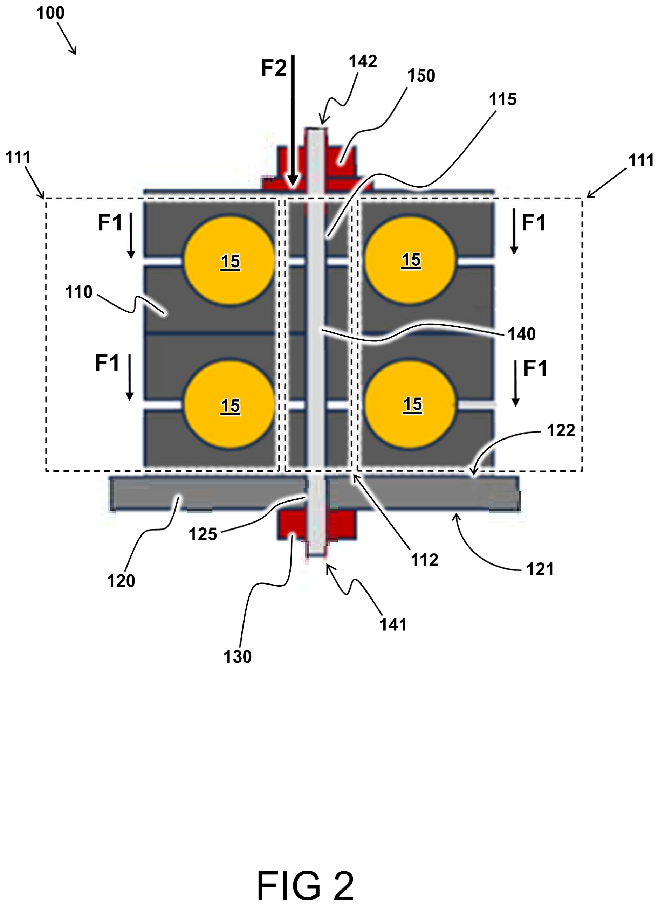

The cable mounting system 100 comprises one or more cable fixtures 110. These are now explained in more detail with reference to FIG. 2. Each cable fixture 110 is provided with clamping parts 111 arranged for locally bundling or fixating the high voltage power cables 15 to each other, preferably at a predefined lateral spacing or interdistance between the cables 15.

Each cable fixture 110 further includes a fixation part 112 for mounting the cable fixture 110 to a base plate 120. As illustrated in FIG. 2 the fixation part 112 may be located centrally between clamping parts 111 on opposing lateral sides of the cable fixture 110. Alternatively, a fixation part 112 may be provided on one or both sides of the clamping parts 111.

The base plate 120 is provided with a number of holes 125 that define the cable path P. Only one of these holes is shown in FIG. 2. A weld nut 130 is welded to a first side 121 of the base plate, such that the weld nut 130 is coaxially aligned with the hole 125. Accordingly, the internal thread of the weld nut 130 is in line with and accessible through the hole 125. A detachable threaded stud 140 is detachably screwed with its first axial end 141 into a respective weld nut 130, such that the opposing second axial end 142 of the detachable threaded stud 140 extends through the hole 125 and protrudes on an opposing second side 122 of the base plate.

The cable fixture 110 is placed over the protruding second axial end of the detachable threaded stud, so that the fixation part 112 of the cable fixture abuts the second side 122 of the base plate. The second axial end 142 of the stud preferably extends through a positioning hole 115 in the fixation part 112. Accordingly, the cable fixture 120 is positioned on the cable path P. In this aligned position, a mounting nut 150 is tightened onto the second axial end 142 beyond the fixation part 112 for thereby securing the cable fixture 110 against the base plate 120 in the aligned position. The mounting nut 150 may be a hex nut with an integrated washer, to further facilitate assembly. Alternatively, or additionally, the mounting nut 150 is a lock nut.

The fixation part 112 preferably comprises a reinforced strut that is arranged for directly transferring a force between the mounting nut 150 and the base plate 120. In other words, the force of the mounting nut 150 does not pass through the clamping part 111 of the cable fixture. The clamping part 111 for example comprises one or more arms that extend transverse to the reinforced strut.

Accordingly, the mounting nut 150 can be tightened and loosened without influencing the clamp connection between the high voltage power cables in the clamping part 111 of the cable fixture, e.g. without increasing or decreasing the pressure that holds the high voltage power cables in place.

Hence, the clamping part 111 of the cable fixture is able to clamp the high voltage power cables 15 with a first force F1, while the fixation part 112 is fixated by the mounting nut 150 onto the base plate 120 with a second force F2. For reliability, the second force F2 is preferably higher than the first force F1.

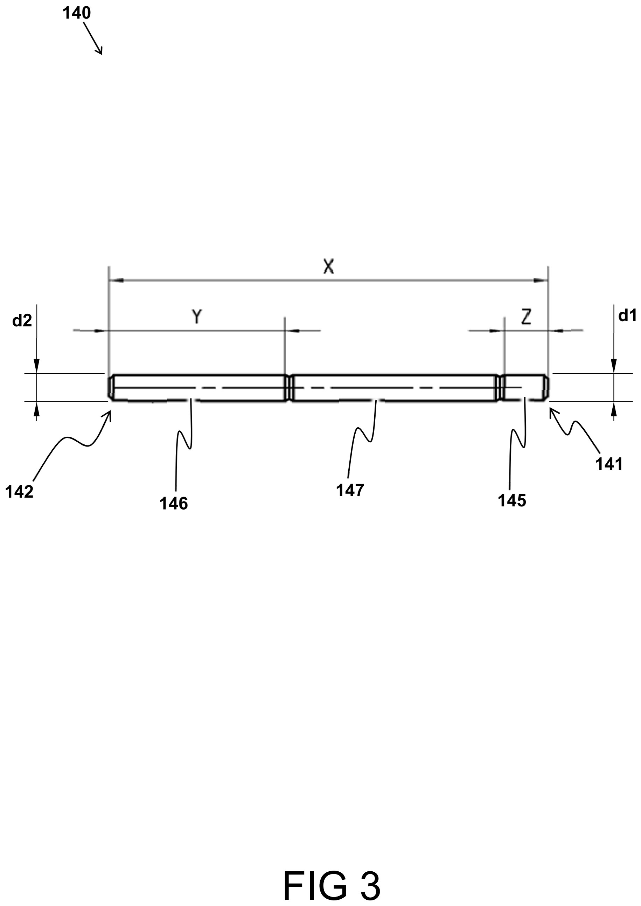

FIG. 3 illustrates a preferred embodiment of the detachable threaded stud 140. Here, the first axial end 141 of the detachable stud comprises a first threaded section 145 arranged for mounting to the weld nut, and the second axial end 142 comprises a second threaded section 146 arranged for mounting to the mounting nut. The total axial length X of the threaded stud 140 is such that when the first axial end 141 of the stud is screwed into the weld nut, the second axial end protrudes through and beyond the positioning hole in the cable fixture. In other words, the total axial length X is larger than the sum of (i) the height of the cable fixture in axial direction of the stud, (ii) the thickness of the base plate, (iii) the height of the weld nut, and (iv) the height of the mounting nut.

The second threaded section 146 preferably differs from the first threaded section 145 to prevent incorrect assembly, e.g. as a "poka yoke" solution. For example, the axial thread length Z of the first threaded section 145 may be shorter than the axial thread length Y of the second threaded section 146. Alternatively, or additionally, the nominal thread diameter d1 of the first threaded section 145 may be smaller than the nominal thread diameter d2 of the second threaded section 146. For example, the first threaded section 145 may comprise an M10 thread, whereas the second threaded section 146 comprises an M12 thread. Optionally, a dog point (not shown) may extend axially from the first axial end 141 to facilitate assembly of the stud into the hole in the base plate and the corresponding weld nut. Alternatively, or additionally, a dog point may be provided on the second axial end 142 to facilitate assembly of the mounting nut onto the stud 140.

As illustrated in FIG. 3, the detachable stud 140 may comprise a third, unthreaded section 147 between the first and second axial end. The third, unthreaded section 147 can be arranged for centering the cable fixture with respect to the stud 140, in particular to align the cable fixture with the predefined cable path. The third section 147 can have a different cross section size and/or shape than that of the first and second threaded sections 145, 146, but that matches the cross section of the positioning hole in the fixation part of the cable fixture. For example, the third section 147 and the positioning hole may have similar rectangular cross sections. Preferably the cross sectional size of the third section 147 is equal to or larger than the outer diameter of the second threaded section 146, so that the cable fixture can be fit over and centered by the threaded stud 140.

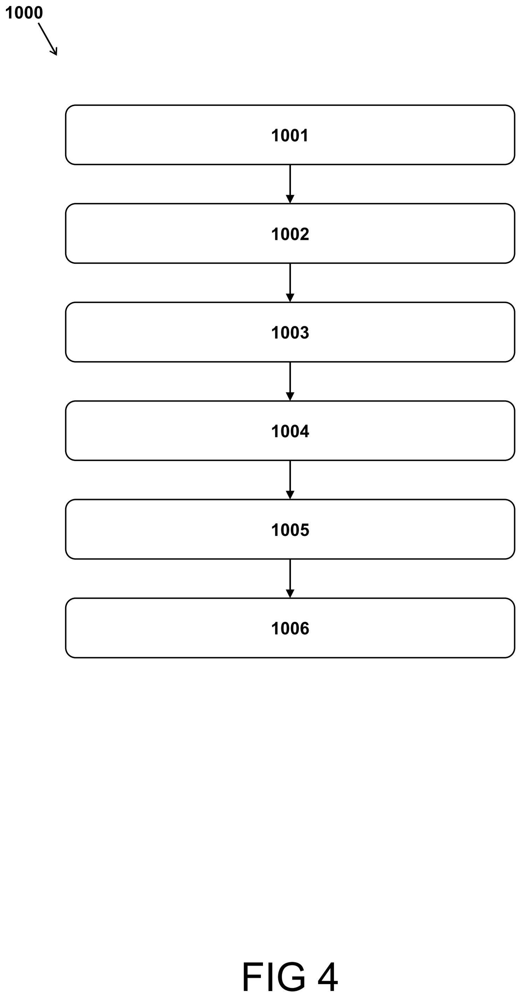

FIG. 4 represents an embodiment of a method 1000 for assembling a truck, e.g. the truck 1 described herein. As described herein, the truck 1 can be a hybrid or full electric truck.

The method 100 comprises the step of locally clamping 1001, using clamping parts of one or more cable fixtures, the high voltage power cables to each other, preferably at a predefined lateral interdistance between the high voltage power cables. In other words, the cable fixtures bundle the high voltage power cables, so that they extend side-by-side with a given lateral offset between the cables.

The method further comprises providing 1002 a base plate with one or more mounting holes along the cable path, and welding 1003 one or more weld nuts to a first side of the base plate such that each weld nut is coaxially aligned with the respective mounting hole.

Next, the method comprises detachably screwing 1004 a detachable threaded stud into each weld nut, such that a first axial end is secured to the weld nut and a second axial end of the threaded stud protrudes through the mounting hole to an opposing second side of the base plate.

Subsequently, in step 1005 a fixation part of a respective cable fixture is placed against the second side of the base plate, such that the second axial end of the stud extends through a positioning hole in the fixation part, and tightening 1006 a mounting nut onto the second axial end beyond the fixation part for thereby clamping the cable fixture onto the base plate.

It will be clear to the skilled person that the invention is not limited to any specific embodiment herein described and that combinations or modifications are possible, in as far as these can be considered within the scope of the appended claims. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such.

## Claims

1. A truck, comprising a high voltage power system, including a number of high voltage power cables arranged for transferring electric power from a high voltage power supply to an electrical load, and a cable mounting system arranged for mounting the high voltage power cables over a predefined cable path, wherein the cable mounting system comprises:
- one or more cable fixtures, each cable fixture comprising a clamping part that is arranged for locally fixating the high voltage power cables to each other;
- a base plate, provided with a series of holes that define the cable path, wherein a weld nut is welded in alignment with each hole to a first side of the base plate;
- a detachable threaded stud, with a first axial end detachably screwed into a respective weld nut, and a second axial end that extends through the hole to an opposing second side of the base plate;
wherein each cable fixture has a fixation part for fixating the cable fixture to the second side of the base plate;
wherein the second axial end of the stud extends through a positioning hole in the fixation part for positioning the cable fixture with respect to the cable path; and
wherein a mounting nut is tightened onto the second axial end beyond the fixation part for thereby mounting the cable fixture onto the base plate.

2. The truck according to claim 1, wherein the clamping part of the cable fixture clamps the high voltage cables with a first force, and wherein the fixation part is fixated by the mounting nut onto the base plate with a second force, which is preferably higher than the first force.

3. The truck according to any preceding claim, wherein the fixation part comprises a reinforced strut arranged for directly transferring a force between the mounting nut and the base plate.

4. The truck according to claim 3, wherein the clamping part comprises one or more arms that extend transverse to the reinforced strut.

5. The truck according to any preceding claim, wherein the mounting nut is a hex nut with an integrated washer.

6. The truck according to any preceding claim, wherein the first axial end of the detachable threaded stud comprises a first threaded section arranged for mounting to the weld nut, and wherein the second axial end comprises a second threaded section arranged for mounting to the mounting nut, wherein the second threaded section differs from the first threaded section.

7. The truck according to claim 6, wherein an axial thread length of the first threaded section is shorter than an axial thread length of the second threaded section.

8. The truck according to claim 6 or 7, wherein a nominal thread diameter of the first threaded section is smaller than a nominal thread diameter of the second threaded section.

9. The truck according to any preceding claim, wherein the first axial end and/or the second axial end of the detachable threaded stud comprises a dog point.

10. The truck according to any preceding claim, wherein the detachable threaded stud comprises an unthreaded section between the first and second axial end.

11. A method for mounting high voltage power cables over a predefined cable path in a truck as defined in any of the preceding claims, comprising:
- locally clamping, using clamping parts of one or more cable fixtures, the high voltage power cables to each other at a predefined interdistance;
- providing a base plate with one or more mounting holes along the cable path;
- welding one or more weld nuts to a first side of the base plate such that each weld nut is coaxially aligned with the respective mounting hole;
- screwing a detachable threaded stud into each weld nut, such that a first axial end is secured to the weld nut and a second axial end of the threaded stud protrudes through the mounting hole to an opposing second side of the base plate;
- placing a fixation part of a respective cable fixture against the second side of the base plate, such that the second axial end of the stud extends through a positioning hole in the fixation part;
- tightening a mounting nut onto the second axial end beyond the fixation part for thereby clamping the cable fixture onto the base plate.

12. The method according to claim 11, wherein the one or more weld nuts are pre-welded to the first side of the base plate.
